**Europäisches Patentamt**

**European Patent Office**

**Office européen des brevets**

(11) Veröffentlichungsnummer: **0 321 671**
**A2**

# EUROPÄISCHE PATENTANMELDUNG

(21) Anmeldenummer: 88117474.2

(22) Anmeldetag: 20.10.88

(51) Int. Cl.⁴ **B64D 35/00 , B64C 27/12**

(30) Priorität: 19.12.87 DE 3743292

(43) Veröffentlichungstag der Anmeldung:
**28.06.89 Patentblatt 89/26**

(84) Benannte Vertragsstaaten:
**DE FR GB IT**

(71) Anmelder: **Dr.Ing.h.c. F. Porsche**
**Aktiengesellschaft**
**Porschestrasse 42**
**D-7000 Stuttgart 40(DE)**

(72) Erfinder: **Mezger, Hans, Dipl.-Ing.**
**Dürerstrasse 17**
**D-7141 Freiberg a.N.(DE)**
Erfinder: **Zaremba. Dieter, Dipl.-Ing.**
**Panoramastrasse 28**
**D-7130 Mühlacker(DE)**

(54) **Kupplung.**

(57) Die Kupplung ist zwischen einer Brennkraftmaschine und einer Hubschraube angeordnet. die zum Antrieb eines Drehflügelflugzeugs dient. Die Kupplung ist eine Strömungskupplung, die einen steuerbaren Ölkreislauf umfaßt. Durch den Ölkreislauf wird die Strömungskupplung beim Betrieb der Brennkraftmaschine mit Öl versorgt. Dagegen entweicht das Öl aus der Strömungskupplung, wenn die Hubschraube unter Autorotation arbeitet.

EP 0 321 671 A2

## Kupplung

Die Erfindung betrifft eine Kupplung nach dem Oberbegriff des Patentanspruchs 1.

Es ist bekannt (Meyer's Lexikon "Technik und exakte Naturwissenschaften 1969, Seite 622), zwischen einer Brennkraftmaschine und einer Hubschraube eines Tragschraubers der Drehflügelflugzeugbauart eine Reibungskupplung vorzusehen.

Aufgabe der Erfindung ist es, die Kupplung, die die Brennkraftmaschine und die Hubschraube eines Drehflügelflugzeuges verbindet, so zu gestalten, daß sie bei guter Kupplungsfunktion schwingungsdämpfend und verschleißfest ist. Dabei sollte diese Kupplung aber auch den bei Autorotation der Luftschraube notwendigen Anforderungen gerecht werden.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die Strömungskupplung verschleißfrei arbeitet und die auftretenden Kräfte zwischen Brennkraftmaschine und Luftschraube sanft überträgt. Auch wirkt diese Strömungskupplung, die ja auch dynamische Flüssigkeitskupplung genannt wird, schwingungsdämpfend.

Darüber hinaus ist bei dem Arbeitsbereich Autorotation der Luftschraube -ihre Drehung ist ausschließlich auf aerodynamische Momente zurückzuführen -der sich z.B. nach unerwünscht festgesetzter Brennkraftmaschine ergibt, die Momentenübertragung zwischen Pumpenrad und Turbinenrad innerhalb kürzester Zeit weitestgehend unterbrochen. Anders ausgedruckt, das Öl entweicht rasch aus der Strömungskupplung und die Drehbewegung der Luftschraube ist im Sinne der Autorotation sichergestellt.

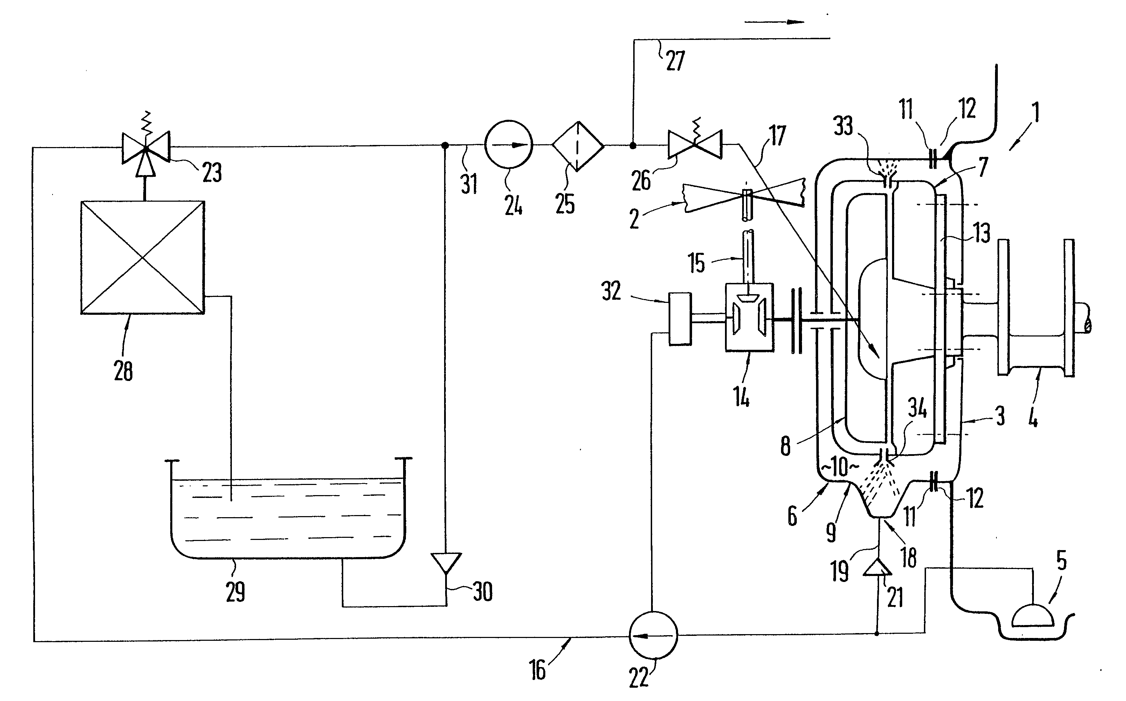

In der Zeichnung, die eine einzige Figur einer Kupplung zwischen Brennkraftmaschine und Luftschraube eines Drehflügelflugzeuges wiedergibt, ist ein Ausführungsbeispiel der Erfindung gezeigt, das nachstehend näher beschrieben ist.

Eine Brennkraftmaschine 1 der Hubkolbenbauart dient zum Antrieb einer Hubschraube 2 eines nicht näher gezeigten Drehflügelflugzeugs, das auch als Hubschrauber bezeichnet wird. Die Brennkraftmaschine 1 umfaßt ein Kurbelgehäuse 3, eine Kurbelwelle 4 und einen Ölsumpf 5. Zwischen Brennkraftmaschine 1 und Hubschraube 2 ist eine Strömungskupplung 6 vorgesehen, die durch ein Pumpenrad 7 und ein Turbinenrad 8 gebildet wird. Das Pumpenrad 7 und das Turbinenrad 8 sind in einem Gehäuse 9 untergebracht. Das Gehäuse 9 begrenzt einen Raum 10 und ist über Flansche 11, 12 mit dem Kurbelgehäuse 3 verbunden. Das Pumpenrad 7 (Antriebsrad) ist unter Vermittlung eines Schwungrades 13 mit der Kurbelwelle 4 verbunden, wogegen das Turbinenrad 8 (Abtriebsrad) unter Zwischenschaltung eines Verteilergetriebes 14 mit der eine Welle 15 aufweisenden Hubschraube 2 verbunden ist.

Mit 16 ist ein Ölkreislauf bezeichnet, mit dem über die Leitung 17 der Strömungskupplung 6 Öl zugeführt wird. Das die Strömungskupplung 6 verlassende Öl tritt bei 18 aus, wo die Leitung 19 verläuft, die über die Leitung 20 an den Schmierölkreislauf der Brennkraftmaschine 1, will heißen an den Ölsumpf 5 angeschlossen ist. In den Ölkreislauf 16 geschaltet ist ein Rückschlagventil 21, eine Absaugpumpe 22, ein Thermostatventil 23, eine Förderpumpe 24, ein Filter 25 und ein Kupplungsventil 26. Eine Rücklaufleitung 27 führt zum Schmierölkreislauf der Brennkraftmaschine 1. Das Thermostatventil 23 steuert erwärmtes Öl zu einem Ölkühler 28, dem ein Ölbehälter 29 nachgeschaltet ist. Eine Leitung 30, die mit einer weiteren Rücklaufleitung 31 versehen ist, führt das Öl aus dem Ölbehälter 29 wieder in den Vorlauf der Leitung 17.

Die Absaugpumpe 22 ist an einen elektrischen Generator 32 angeschlossen, der in Wirkverbindung mit der Hubschraube 2 steht.

Am Pumpenrad 7 sind Düsen 33, 34 vorgesehen, die in den Raum 10 münden. Nach dem Anlauf der Brennkraftmaschine 1 wird der Umlauf des Ölkreislaufs 16 in Gang gesetzt. Nach Erreichen der Betriebstemperatur wird die Brennkraftmaschine 1 auf Dauerlaufdrehzahl hochgefahren, wodurch eine allmähliche Angleichung der Drehzahl des Turbinenrades 8 an die Drehzahl des Pumpenrades 7 erfolgt; jetzt wird Drehmoment auf die Hubschraube 2 übertragen.

Bei Störungen der Brennkraftmaschine 1, beispielsweise die Kurbelwelle 4 ist fest, steht auch das Pumpenrad 7. Die mit höherem Trägheitsmoment behaftete Hubschraube 2 läuft weiter; die Autorotation, hervorgerufen durch aerodynamische Momente, beginnt. Das Öl tritt, beschleunigt durch das Turbinenrad 7, rasch in den Raum 10 ein, die Strömungskupplung 6 entleert sich, wobei das Öl von der Absaugpumpe 22, die ja jetzt mit dem Strom des Generators 32 betrieben wird, in den Ölkreislauf 17 ein; es wird in den Ölbehälter 29 gefördert. In dieser Phase ist das Ventil 26 geschlossen. Damit ist die Hubschraube 2 von der Brennkraftmaschine 1 entkoppelt und das Drehflügelflugzeug landet durch Autorotation.

## Ansprüche

1. Kupplung zwischen einer Brennkraftmaschine und einer Luftschraube, vorzugsweise Hubschraube, die zum Antrieb eines Drehflügelflugzeugs dient, dadurch gekennzeichnet, daß die Kupplung eine Strömungskupplung (6) ist, die einen steuerbaren Ölkreislauf (16) umfaßt, dergestalt, daß beim Betrieb der Brennkraftmaschine die Strömungskupplung (6) mit Öl versorgt wird, jedoch bei Autorotation der Hubschraube (2) das Öl aus der Strömungskupplung (6) entweicht.

2. Kupplung nach Anspruch 1, dadurch gekennzeichnet, daß in den Ölkreislauf (16) wenigstens eine elektrische Absaugpumpe (22) geschaltet ist, die mittels eines mit der Hubschraube (2) gekoppelten elektrischen Generators (32) verbunden ist.

3. Kupplung nach den Ansprüchen 1 und 2, dadurch gekennzeichnet, daß in den Ölkreislauf (16) ein Ölbehälter (29), ein Ölkühler (28) und eine Förderpumpe (24) geschaltet sind.

4. Kupplung nach Anspruch 1, die ein Pumpenrad und ein Turbinenrad umfaßt, dadurch gekennzeichnet, daß das Pumpenrad (7) und das Turbinenrad (8) in einem Gehäuse (9) untergebracht sind, wobei das Pumpenrad (7) ein oder mehrere Düsen (33, 34) aufweist, die in den das Gehäuse (9) begrenzenden Raum (10) münden.

5. Kupplung nach Anspruch 4, dadurch gekennzeichnet, daß das Gehäuse (9) mit einem Kurbelgehäuse (3) der Brennkraftmaschine (1) verbunden ist.

6. Kupplung nach Anspruch 5, dadurch gekennzeichnet, daß das Gehäuse (9) und das Kurbelgehäuse (3) über Flansche (11, 12) miteinander verbunden sind.

7. Kupplung nach einem oder mehreren der vorangehenden Ansprüche, dadurch gekennzeichnet, daß das Pumpenrad (7) vorzugsweise unter Vermittlung eines Schwungrades (13) mit einer Kurbelwelle (4) der Brennkraftmaschine (1) verbunden ist.

EP 0 321 671 A2